# EUROPEAN PATENT SPECIFICATION

(11) **EP 3 582 660 B1**
(45) Date of publication and mention of the grant of the patent: **12.07.2023**
(21) Application number: 18707859.7
(22) Date of filing: 12.02.2018
(51) Int. Cl.: A47J 36/32, A23L 5/10, A23L 19/00, A47J 27/00

(54) **TEMPERATURE CONTROL DEVICE, FOOD COOKING DEVICE AND METHOD FOR CONTROLLING A HEATING UNIT FOR COOKING FOOD**
TEMPERATURSTEUERUNGSVORRICHTUNG, LEBENSMITTELKOCHGERÄT UND STEUERUNGSVERFAHREN FÜR HEIZGERÄT FÜR LEBENSMITTELZUBEREITUNG
DISPOSITIF DE RÉGULATION DE LA TEMPÉRATURE, DISPOSITIF DE CUISSON ALIMENTAIRE ET PROCÉDÉ DE COMMANDE D'UNE UNITÉ DE CHAUFFAGE POUR CUISSON D'ALIMENTS

(30) Priority: 17.02.2017 WO PCT/CN2017/000182; 09.05.2017 EP 17170153
(43) Date of publication of application: 25.12.2019
(73) Proprietor: Koninklijke Philips N.V., 5656 AG Eindhoven (NL)
(72) Inventor: SU, Guangming, 5656 AE Eindhoven (NL); SUN, Wen, 5656 AE Eindhoven (NL); CHEN, Yun, 5656 AE Eindhoven (NL); LU, Weihua, 5656 AE Eindhoven (NL)
(74) Representative: Vollering, Stefanus Franciscus Maria
(86) International application number: PCT/EP2018/053374
(87) International publication number: WO 2018/149764

(56) References cited:
- WO-A1-2013/035029
- WO-A1-2015/172042
- CN-A- 102 749 860
- US-A- 5 111 026
- US-A1- 2016 081 372
- MUNYAKA A W ET AL: "Acidification, crushing and thermal treatments can influence the profile and stability of folate poly-@c-glutamates in broccoli (Brassica oleracea L. var. italica)", FOOD CHEMISTRY, ELSEVIER LTD, NL, vol. 117, no. 3, 1 December 2009 (2009-12-01), pages 568-575, XP026157735, ISSN: 0308-8146, DOI: 10.1016/J.FOODCHEM.2009.04.036 [retrieved on 2009-04-19]
- ANN WAMBUI MUNYAKA ET AL: "Influence of Thermal Processing on Hydrolysis and Stability of Folate Poly-gamma-glutamates in Broccoli ( Brassica oleracea var. italica ), Carrot ( Daucus carota ) and Tomato ( Lycopersicon esculentum )", JOURNAL OF AGRICULTURAL AND FOOD CHEMISTRY, vol. 58, no. 7, 14 April 2010 (2010-04-14) , pages 4230-4240, XP055387073, ISSN: 0021-8561, DOI: 10.1021/jf100004w
- DEREK J. MCKILLOP ET AL: "The effect of different cooking methods on folate retention in various foods that are amongst the major contributors to folate intake in the UK diet", BRITISH JOURNAL OF NUTRITION, vol. 88, no. 06, 1 December 2002 (2002-12-01), page 681, XP055480084, UK ISSN: 0007-1145, DOI: 10.1079/BJN2002733

## Description

### FIELD OF THE INVENTION

The present invention relates to a temperature control device, a food cooking device, a temperature control method and a computer program.

### BACKGROUND OF THE INVENTION

Folate is a water-soluble B vitamin that is naturally present in some foods, added to others, and available as a dietary supplement. Folate, formerly known as folacin, is the generic term for both naturally occurring food folate and folic acid, the fully oxidized monoglutamate form of the vitamin that is used in dietary supplements and fortified foods.

The methylation of deoxyuridylate to thymidylate in the formation of DNA is a folate-dependent reaction required for proper cell division. An impairment of this reaction can lead to megaloblastic anemia, one of the hallmarks of folate deficiency.

Folate deficiency in humans decreases DNA biosynthesis and thus affects cellular functions, growth, and development. There is a variety of disorders associated with folate deficiency, including neural tube defects such as spina bafida and anencephaly, megaloblastic anemia, occlusive vascular disease, colon cancer, Down's syndrome, and Alzheimer's disease. As human cells cannot sythesize folate de novo, they must obtain this vitamin from their dietary sources.

Folic acid is from chemical synthesis, and it is not recommended to take folic acid since it is not known whether an overdose of folic acid has unhealthy effects.

Globally, the main types of naturally occurring food folates contain additional glutamate residues, making them polyglutamates. But the mono-type, which is the dominant type that intestinal mucosa can absorb and transfer, accounts for very low percentage.

When consumed, food folates are hydrolyzed to the monoglutamate (and short chain) forms in the gut prior to absorption by active transport across the intestinal mucosa. The hydrolysis of deconjugation is performed by hydrolases or conjugases. Although normal population have such conjugase in their body, some special cases can lead to shortage of deconjugation. Since brush border conjugase is zinc-dependent, zinc deficiency can diminish folate absorption. Conjugase inhibitors in foods such as legumes, lentils, cabbage, and oranges can also diminish conjugase activity to impair folate digestion. As a result, a very low folate bioavailability is found in some population, which has possibilities to induce folate deficiency symptoms. Also, high ratio of polyglutamate forms in foods can also increase the digestability stress for normal population.

In normal cooking of vegetables, the temperature continuously increases with cooking time till a target temperature. The end cooking temperature varies with vegetable types and cooking methods, but generally is higher than 70°C-80°C. Such high temperatures have at least two effects on vegetables: (1) break plant cell structures, which can bring different plant cell compounds to contact each other, therefore, bringing γ-glutamyl hydrolase, which is only located in vacuoles, in close contact to polyglutamate forms of folate and deconjugate them into monoglutamate forms; (2) inactivate all γ-glutamyl hydrolase, before the enzyme can deconjugate all the polyglutamate forms of folates. Therefore, normally cooked vegetables can still contain a lot of polyglutamate forms of folate.

FR 2674100 A1 discloses an aseptic method for processing fresh foodstuffs and a device with a system for circulating water in a countercurrent direction for processing these products according to this method. This method consists in successively loading fresh products on to a conveyor and then conveying these products through at least one preheating zone, a conversion zone, in which they are sprayed with water at the cooking temperature, a cooling zone in which they are sprayed with cold water and a draining zone.

WO 2013/035029 A1 discloses a puree preparation method and device.

Ann Wambui Munyaka et al., in "Influence of Thermal Processing on Hydrolysis and Stability of Folate Poly-γ-glutamates in Broccoli (*Brassica oleracea var. italica*), Carrot (*Daucus carota*) and Tomato (*Lycopersicon esculentum*)*",* disclose an evaluation of folate poly-γ-glutamate profile, concentrations, and hydrolysis by endogeneous γ-glutamyl hydrolase (GGH) in broccoli, carrot and tomato.

### SUMMARY OF THE INVENTION

The invention is defined by the independent claims of the appended set of claims.

It is an object of the present invention to provide a temperature control device
and method for generating a sufficient amount of short chain and monoglutamate forms of folates in order to prevent folate deficiency.

In a first aspect of the present invention a temperature control device is presented which comprises a control unit configured to control a heating unit of a food cooking device according to the following control scheme:
i) a preheating period for heating up the food to a first food temperature of at most 60°C;
ii) a temperature holding period for holding the food temperature within a temperature range of 30°C to 60°C for a holding time period in the range of 2 to 20 minutes, wherein during the preheating period the food is preheated from a start temperature to a beginning temperature of the temperature holding period; and, after the temperature holding period,
iii) a heating period for heating up the food to a second food temperature of at most 100°C.

In a further aspect of the present invention a food cooking device is presented which comprises a heating unit and a temperature control device for controlling the heating unit.

In a further aspect of the present invention a temperature control method is presented which controls a heating unit of a food cooking device according to the following control scheme:
i) a preheating period for heating up the food to a first food temperature of at most 60°C;
ii) a temperature holding period for holding the food temperature within a temperature range of 30°C to 60°C for a holding time period in the range of 2 to 20 minutes, wherein during the preheating period the food is preheated from a start temperature to a beginning temperature of the temperature holding period; and, after the temperature holding period,
iii) a heating period for heating up the food to a second food temperature of at most 100°C. In yet a further aspect of the present invention, there is provided a computer program which comprises program code means to carry out the steps of the temperature control method when said computer program is carried out on the computer
as well as a non-transitory computer-readable recording medium that stores therein a computer program product, which, when executed by a processor, causes the method disclosed herein to be performed.

Preferred embodiments of the invention are defined in the dependent claims. It shall be understood that the claimed temperature control method, food cooking device, computer program and medium have similar and/or identical preferred embodiments as the claimed device, in particular as defined in the dependent claims and as disclosed herein.

The present invention is based on the idea to increase the deconjugation of polyglutamate forms of folate in foods during the cooking process and therefore to increase the bioavailability of natural sources of folate from foods.

Generally, during normal vegetable cooking processes, high temperatures inactivate all of γ-glutamyl hydrolase before the enzyme can deconjugate all the polyglutamate forms of folates. Hence, cooked vegetables can still contain a lot of polyglutamate forms of folates. These, however, cannot be absorbed by special population and therefore will induce folate deficiency. Besides, a high ratio of polyglutamate folate forms in foods can increase digestability stress in normal population.

By introducing a temperature holding period of at least one minute before heating up foods above 70°C, polyglutamate forms of folates and γ-glutamyl hydrolase in vegetables can be released from cell structure due to cell structures breakdown to contact each other for a determined time before all γ-glutamyl hydrolase are inactivated. Therefore, polyglutamate forms of folate can be deconjugated into mono type and/or short chain types.

The proposed approach has the advantage that it increases the digestability of folates in cooked vegetable, therefore reducing folate deficiency and digestability stress of the population.

In an embodiment of the temperature control device, the temperature control device may be configured to include a cooling period for cooling the food after the food temperature has reached the second food temperature.

In an embodiment of the temperature control device, the control unit may be configured to control a cooling unit for cooling the food. This enables a faster cooling of the cooked foods thereby preventing folate loss due to heat and ensuring a temperature suitable for eating.

In another embodiment of the temperature control device, the control unit is configured to control the heating unit in the temperature holding period to hold the food temperature in the range of 40°C to 60°C. This ensures γ-glutamyl hydrolase to be released from cell structure, but protects γ-glutamyl hydrolase from thermal inactivation.

In yet another embodiment of the temperature control device, the control unit is configured to control the heating unit in the temperature holding period to hold the food temperature within the temperature range of 30°C to 60°C for a holding time period in the range of 2 to 5 minutes. This ensures sufficient hydrolysis of enzymatic reactions of γ-glutamyl hydrolase on polyglutamate forms of folates into short chain and monoglutamate forms of folates before thermal inactivation of γ-glutamyl hydrolase.

The temperature control device may further comprise a sensor input for receiving sensor data representing the food temperature. For instance, a sensor input may receive food temperature data directly from a food temperature sensor included in the food container.

In another embodiment, the temperature control device may further comprise a food type input for receiving food type information identifying the type of food. This provides additional functionality for the food cooking device and allows for a cooking process that is optimally adapted to the food type characteristic temperature range corresponding to γ-glutamyl hydrolase release and the prevention of thermal inactivation.

The food cooking device may generally be any device comprising a heating unit and a temperature control device for controlling the heating unit. Exemplary (but nonlimiting) embodiments include a baby food maker, a multi-cooker, a sous vide appliance, a steamer, a microwave oven, an oven, a hob etc., which is able to provide the desired functionalities.

The disclosed food cooking device further comprises a temperature sensor for sensing the food temperature and/or a food-related temperature from which the food temperature can be determined, wherein the control device is configured to use the sensed temperature for controlling the heating unit. This enables the foods to be cooked at the desired temperatures.

In another embodiment, the food cooking device may further comprise a user interface for receiving food type information identifying the type of food input, wherein the control device is configured to use the food type information for controlling the heating unit.

This provides additional functionality for the food cooking device and allows for a cooking process that is optimally adapted to the food type characteristic temperature range corresponding to γ-glutamyl hydrolase release and the prevention of thermal inactivation.

In yet another embodiment, the food cooking device may further comprise a food type sensor for detecting the type of food and generating food type information identifying the type of food, wherein the control device is configured to use the food type information for controlling the heating unit. This provides additional functionality for the food cooking device and allows for a cooking process that is optimally adapted to the food type characteristic temperature range corresponding to γ-glutamyl hydrolase release and the prevention of thermal inactivation.

### BRIEF DESCRIPTION OF THE DRAWINGS

These and other aspects of the invention will be apparent from and elucidated with reference to the embodiment(s) described hereinafter. In the following drawings
Fig. 1 shows a schematic diagram of an embodiment of a food cooking device according to the present invention,
Fig. 2 shows a schematic diagram of an embodiment of a temperature control device according to the present invention,
Fig. 3 shows a schematic diagram of another embodiment of a food cooking device according to the present invention,
Fig. 4 shows a side view of an exemplary implementation of an embodiment of a food cooking device configured as baby food maker according to the present invention,
Fig. 5 shows a front view of an exemplary implementation of an embodiment of a food cooking device configured as a steamer according to the present invention,
Figs. 6A and 6B show a flow chart of an embodiment of a method for cooking food using a temperature control method according to the present invention and typical cooking temperature profiles according to the present invention,
Fig. 7 shows the relationship between temperature and plant (beetroot) cell compartments integrity (heating time: 3 min),
Fig. 8 shows the relationship between the folate composition in broccoli with respect to the number of glutamate chains in polyglutamate forms of folate and two cooking methods, and
Fig. 9 shows the relationship between the folate composition in carrots with respect to the number of glutamate chains in polyglutamate forms of folate and two cooking methods.

### DETAILED DESCRIPTION OF THE EMBODIMENTS

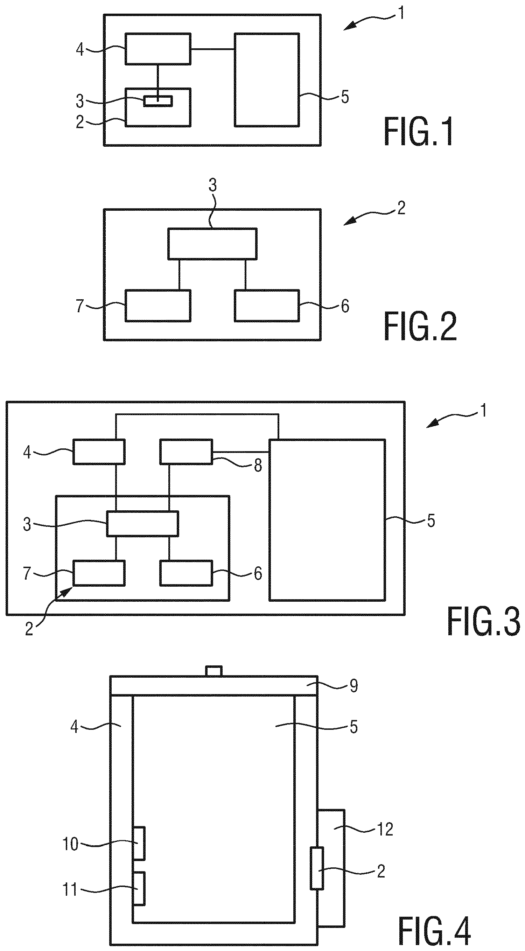

Fig. 1 shows a schematic diagram of an embodiment of a food cooking device 1 according to the present invention. The food coking device 1 comprises a temperature control device 2 including a control unit 3 for controlling a heating unit 4, which is configured for heating the food in the food container 5.

The temperature control device 2 is configured for controlling a heating unit 4 of a food cooking device 1 according to a control scheme. The control scheme particularly comprises the following steps:
i) a preheating period for heating up the food to a first food temperature of at most 60°C;
ii) a temperature holding period for holding the food temperature within a temperature range of 30°C to 60°C for a holding time period in the range of 2 to 20 minutes, wherein during the preheating period the food is preheated from a start temperature to a beginning temperature of the temperature holding period; and, after the temperature holding period,
iii) a heating period for heating up the food to a second food temperature of at most 100°C.

While existing cooking methods do not include a temperature holding period, this temperature holding period ensures that γ-glutamyl hydrolase is not thermally inactivated and thus can hydrolyze polyglutamate forms of folate into monoglutamate forms. Further, only monoglutamate forms of folate can be absorbed by human gut intestinal mucosal cells. Hence, the present invention enhances folate bioavailability during cooking processes.

Fig. 2 shows a schematic diagram of an embodiment of a temperature control device 2 according to the present invention. The temperature control device 2 comprises a control unit 3 and may further comprise a sensor input unit 6 and/or a food type input unit 7. While the sensor input unit receives temperature data corresponding to the temperature of the food in the food container 5, the food type input unit 7 receives data corresponding to the type of food in the food container 5. Both the sensor input unit and the food type input unit may pass their data on to the control unit 3.

Fig. 3 shows a schematic diagram of another embodiment of a food cooking device according to the present invention. The food coking device 1 comprises a temperature control device 2 including a control unit 3 for controlling a heating unit 4 and/or a cooling unit 8, which are also comprised in the food cooking device 2. While the heating unit 4 is configured for heating the food in the food container 5, the cooling unit 8 is configured for cooling the food in the food container 5.

Fig. 4 shows a side view of an exemplary implementation of an embodiment of a food cooking device 1 configured as baby food maker according to the present invention. The food container 5 is configured as a cylinder having a lid 9 for closing the food container 5 and is encased by the heating unit 4 for guaranteeing a heat distribution that is as uniform as possible. The heating unit 4 is controlled by the temperature control unit 2.

As shown in Fig. 4, the food cooking device 1 may further comprise a temperature sensor 10 integrated in the food container 5 for sensing the food temperature and/or a food-related temperature from which the food temperature can be determined, wherein the temperature control device 2 is configured to use the sensed temperature for controlling the heating unit 4. Further, a food type sensor 11 for sensing the type of food and generating food type information identifying the type of food may be provided, wherein the temperature control device 2 is configured to use the food type information for controlling the heating unit 4. Furthermore, a user interface 12 for receiving food type information identifying the type of food input, wherein the temperature control device 2 is configured to use the food type information for controlling the heating unit 4.

In another embodiment of a food cooking device 1 the temperature sensor 10 may not be integrated in the food container 5, but put in the food container 5 by a user itself.

The food type sensor 11 may be configured to be a spectrometer analyzing the type of food.

The user interface 12 may be configured to receive type of food data from the user, but other input data like a desired end temperature of a starting time for the cooking process are also conceivable.

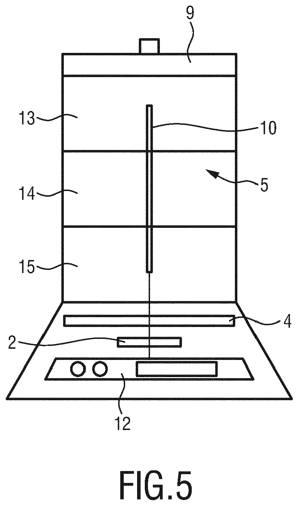

Fig. 5 shows a front view of an exemplary implementation of an embodiment of a food cooking device 1 configured as a steamer according to the present invention. The food container 5 is configured as a cylinder comprising several food cooking compartments 13, 14, 15 having a lid 9 for closing the food container 5. Directly below the food container 5 there is a water tank 16. The water in the water tank 16 may be heated up by the heating unit 4, which is controlled by the temperature control device 2, such that steam is produced for steaming food located in the food cooking compartments 13, 14, 15 of the food container 5. The temperature control is both connected to a temperature sensor 10 integrated in the food container 5 sensing the food temperature and/or a food-related temperature from which the food temperature can be determined and to a user interface 12 receiving food type information identifying the type of food input.

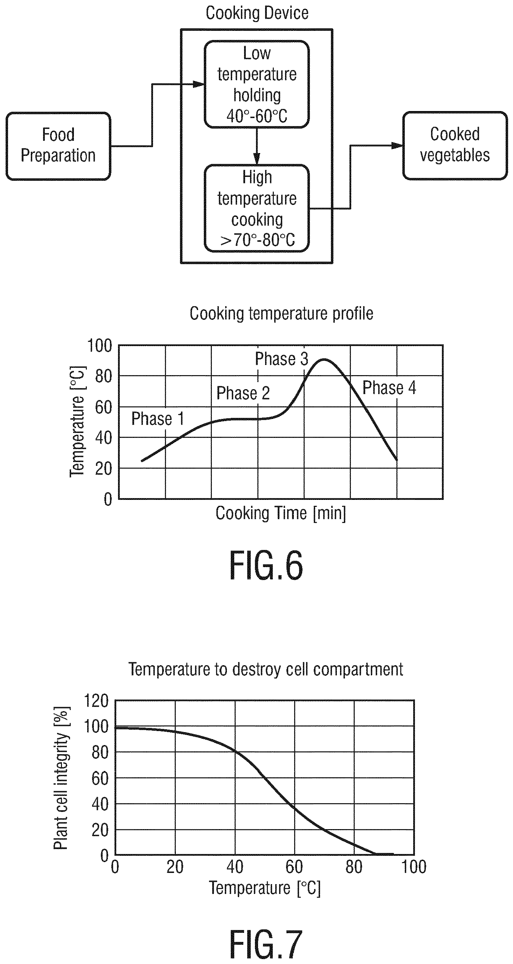

Fig. 6A shows a flow chart of an embodiment of a method for cooking food using a temperature control method according to the present invention. After preparing the food it is important that the food temperature is held within a temperature range of 30°C to 60°C for at least two minutes during a temperature holding period before high temperature cooking.

Fig. 6B shows a typical cooking temperature profile according to an embodiment of the present invention. During phase 1, a preheating period, the foods are preheated from the start temperature to the beginning temperature of phase 2. Instead of heating up the foods further in a continuous manner, phase 2 represents a low temperature holding period, in which the food temperature range is set within 40°C to 60°C. At such temperature range, heat input on vegetables can destroy cell compartments so that both γ-glutamyl hydrolase and folate can be released from their own organelles, respectively. But such levels of temperature cannot inactivate most γ-glutamyl hydrolase, as a result, γ-glutamyl hydrolase can hydrolyze polyglutamate forms of folate into monoglutamate forms (and shorter chains of polyglutamate forms of folate) within minutes. And only monoglutamate forms of folate can be absorbed by human gut intestinal mucosal cells. Hence, the bioavailability of monoglutamate forms of folate from vegetables is higher than the mixture of mono- and polyglutamate forms of folate. In phase 3, a heating period, the foods are heated up until the accepted doneness level. The heating methods in phases 1-3 can be any of current available heating and temperature control technologies. Phase 4 represents a cooling period, in which the food is cooled to accepted temperature. The methods of cooling can be any of available methods including active and passive cooling methods.

Fig. 7 shows the relationship between temperature and plant (beetroot) cell compartments integrity during a heating time of 3 minutes. As shown in Fig. 7 the integrity of plant cells decreases with temperature. Heat treatment at 40°C food temperature for 3 minutes can destroy ~20% plant cells, while heat treatment at 60°C food temperature for 3 minutes can destroy ~60% plant cells. Although higher food temperatures, for example 70°C, can destroy more plant cells, such higher temperatures can bring more side effects, especially on heat-sensitive nutrients, which is considered as major drawback of high temperature. Therefore, a temperature range between 30°C to 60°C is selected for the temperature holding period in the temperature control method according to this invention.

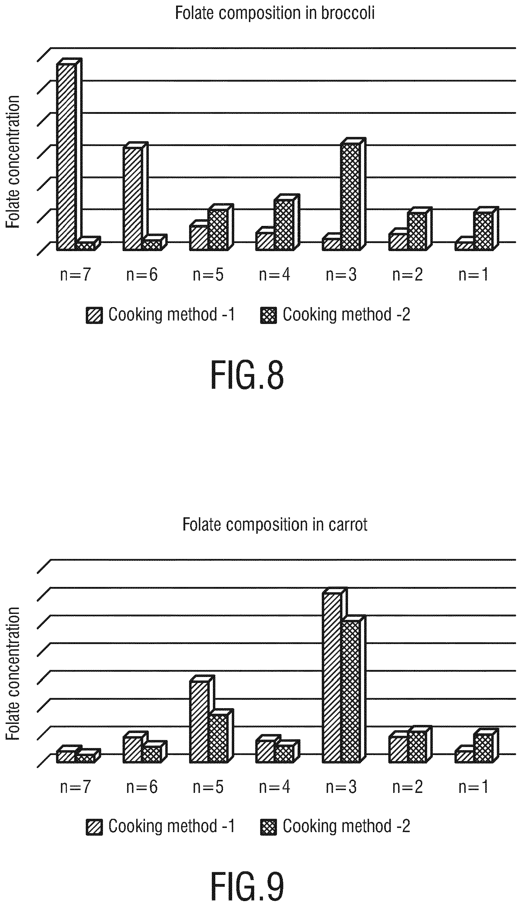

Fig. 8 shows the relationship between the folate composition in broccoli with respect to the number of glutamate chains in polyglutamate forms of folate and two cooking methods, cooking method 1 being an existing cooking method of a baby food maker and cooking method 2 being a cooking method including the temperature control method according to this invention. As can be seen from Fig. 8, cooking method 1 discloses less folate content the shorter the glutamate chains in polyglutamate forms of folate become. Contrary to method 1, method 2 discloses more folate content the shorter the glutamate chains in polyglutamate forms of folate become, with two-chain polyglutamate forms of folate and monoglutamate forms being an exception. In cooking method 1, a higher concentration of long chains polyglutamate was found, while in cooking method 2, the folate composition shift from long chains to short chains with a higher concentration in short chains (n=1-5).

Fig. 9 shows the relationship between the folate composition in carrots with respect to the number of glutamate chains in polyglutamate forms of folate and two cooking methods, cooking method 1 being an existing cooking method of a sous vide appliance and cooking method 2 being a cooking method including the temperature control method according to this invention.

As can be seen from Fig. 9, a higher ratio of long chain of polyglutamate forms of folate were found in carrots treated with cooking method 1, while a higher ratio of short chain polyglutamate forms of folate and monoglutamate folates were observed in carrots with cooking method 2. This fact indicates more enzyme activities of γ-glutamyl hydrolase on deconjugation of polyglutamate forms of folate during cooking method 2.

Therefore, cooking vegetables according to method 2 folates can be absorbed easier.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

A computer program may be stored/distributed on a suitable non-transitory medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. A temperature control device comprising a control unit configured to control a heating unit of a food cooking device according to the following control scheme:
i) a preheating period for heating up the food to a first food temperature of at most 60°C;
ii) a temperature holding period for holding the food temperature within a temperature range of 30°C to 60°C for a holding time period in the range of 2 to 20 minutes, wherein during the preheating period the food is preheated from a start temperature to a beginning temperature of the temperature holding period; and, after the temperature holding period,
iii) a heating period for heating up the food to a second food temperature of at most 100°C.

2. The temperature control device according to claim 1,
further comprising a sensor input for receiving sensor data representing the food temperature.

3. The temperature control device according to any one of the preceding claims, further comprising a food type input for receiving food type information identifying the type of food.

4. The temperature control device according to any one of the preceding claims,
wherein the control scheme further comprises a cooling period for cooling the food after the food temperature has reached the second food temperature.

5. The temperature control device according to any one of the preceding claims, wherein the control unit is configured to control a cooling unit for cooling the food in a cooling period after the food temperature has reached the second food temperature.

6. The temperature control device according to any one of the preceding claims, wherein the control unit is configured to control the heating unit in the temperature holding period to hold the food temperature in the range of 40°C to 60°C.

7. The temperature control device according to any one of the preceding claims, wherein the control unit is configured to control the heating unit in the temperature holding period to hold the food temperature within the temperature range of 30°C to 60°C for a holding time period in the range of 2 to 5 minutes.

8. A food cooking device comprising a heating unit and a temperature control device according to any one of the preceding claims for controlling the heating unit.

9. The food cooking device according to claim 8,
further comprising a temperature sensor for sensing the food temperature and/or a food-related temperature from which the food temperature can be determined, wherein the temperature control device is configured to use the sensed temperature for controlling the heating unit.

10. The food cooking device according to claim 8 or 9,
further comprising a user interface for receiving food type information identifying the type of food input, wherein the temperature control device is configured to use the food type information for controlling the heating unit.

11. The food cooking device according to any one of claims 8-10,
further comprising a food type sensor for sensing the type of food and generating food type information identifying the type of food, wherein the temperature control device is configured to use the food type information for controlling the heating unit.

12. The food cooking device according to any one of claims 8-11,
wherein the food cooking device is configured as baby food maker, multi-cooker, sous vide appliance, steamer, microwave oven, oven or hob.

13. A temperature control method for controlling a heating unit of a food cooking device according to the following control scheme:
i) a preheating period for heating up the food to a first food temperature of at most 60°C;
ii) a temperature holding period for holding the food temperature within a temperature range of 30°C to 60°C for a holding time period in the range of 2 to 20 minutes, wherein during the preheating period the food is preheated from a start temperature to a beginning temperature of the temperature holding period; and, after the temperature holding period,
iii) a heating period for heating up the food to a second food temperature of at most 100°C.

14. A temperature control method according to claim 13,
wherein the control scheme further comprises a cooling period for cooling the food after the food temperature has reached the second food temperature.

15. A temperature control computer program comprising program code means for causing a computer to carry out the steps of the temperature control method as claimed in claim 13 when said computer program is carried out on the computer.

## Patentansprüche

1. Temperatursteuervorrichtung, umfassend eine Steuereinheit, die konfiguriert ist, um eine Heizeinheit einer Lebensmittelkochvorrichtung gemäß dem folgenden Steuerschema zu steuern:
i) eine Vorwärmperiode zum Aufwärmen des Lebensmittels auf eine erste Temperatur von höchstens 60°C;
ii) eine Temperaturhalteperiode zum Halten der Lebensmitteltemperatur innerhalb eines Temperaturbereichs von 30°C bis 60°C über eine Haltezeitdauer in dem Bereich von 2 bis 20 Minuten, wobei das Lebensmittel während der Vorwärmperiode von einer Starttemperatur auf eine Anfangstemperatur der Temperaturhalteperiode vorgewärmt wird; und nach der Temperaturhalteperiode,
iii) eine Aufwärmperiode zum Erwärmen des Lebensmittels auf eine zweite Lebensmitteltemperatur von höchstens 100°C.

2. Temperatursteuervorrichtung nach Anspruch 1, ferner umfassend einen Sensoreingang zum Empfangen von Sensordaten, die die Lebensmitteltemperatur darstellen.

3. Temperatursteuervorrichtung nach einem der vorherigen Ansprüche, ferner umfassend einen Lebensmitteltypeingang zum Erhalten von Lebensmitteltypinformationen, die den Typ des Lebensmittels identifizieren.

4. Temperatursteuervorrichtung nach einem der vorherigen Ansprüche, wobei das Steuerschema ferner eine Abkühlungsperiode zum Abkühlen des Lebensmittels umfasst, nachdem die Lebensmitteltemperatur die zweite Lebensmitteltemperatur erreicht hat.

5. Temperatursteuervorrichtung nach einem der vorherigen Ansprüche, wobei die Steuereinheit konfiguriert ist, um eine Kühleinheit zum Kühlen des Lebensmittels in einer Kühlperiode zu steuern, nachdem die Lebensmitteltemperatur die zweite Lebensmitteltemperatur erreicht hat.

6. Temperatursteuervorrichtung nach einem der vorherigen Ansprüche, wobei die Steuereinheit konfiguriert ist, um die Heizeinheit in der Temperaturhalteperiode zu steuern, um die Lebensmitteltemperatur in dem Bereich von 40°C bis 60°C zu halten.

7. Temperatursteuervorrichtung nach einem der vorherigen Ansprüche, wobei die Steuereinheit konfiguriert ist, um die Heizeinheit in der Temperaturhalteperiode zu steuern, um die Lebensmitteltemperatur innerhalb des Temperaturbereichs von 30°C bis 60°C über eine Haltezeitperiode in dem Bereich von 2 bis 5 Minuten zu halten.

8. Lebensmittelkochvorrichtung, umfassend eine Heizeinheit und eine Temperatursteuervorrichtung nach einem der vorherigen Ansprüche zum Steuern der Heizeinheit.

9. Lebensmittelkochvorrichtung nach Anspruch 8, ferner umfassend einen Temperatursensor zum Erfassen der Lebensmitteltemperatur und/oder einer lebensmittelbezogenen Temperatur, aus der die Lebensmitteltemperatur bestimmt werden kann, wobei die Temperatursteuervorrichtung konfiguriert ist, um die erfasste Temperatur zum Steuern der Heizeinheit zu verwenden.

10. Lebensmittelkochvorrichtung nach Anspruch 8 oder 9, ferner umfassend eine Benutzerschnittstelle zum Empfangen von Lebensmitteleingang identifizieren, wobei die Temperatursteuervorrichtung konfiguriert ist, um die Lebensmitteltypinformationen zum Steuern der Heizeinheit zu verwenden.

11. Lebensmittelkochvorrichtung nach einem der Ansprüche 8-10, ferner umfassend einen Lebensmitteltypsensor zum Erfassen des Lebensmitteltyps und Erzeugen von Lebensmitteltypinformationen, die den Lebensmitteltyp identifizieren, wobei die Temperatursteuervorrichtung konfiguriert ist, um die Lebensmitteltypinformationen zum Steuern der Heizeinheit zu verwenden.

12. Lebensmittelkochvorrichtung nach einem der Ansprüche 8-11, wobei die Lebensmittelkochvorrichtung als Babynahrungszubereiter, Multikocher, Sous-Vide-Gerät, Dampfgarer, Mikrowellenherd, Backofen oder Kochfeld konfiguriert ist.

13. Temperatursteuerverfahren zum Steuern einer Heizeinheit einer Lebensmittelkochvorrichtung gemäß dem folgenden Steuerschema:
i) eine Vorwärmperiode zum Aufwärmen des Lebensmittels auf eine erste Temperatur von höchstens 60°C;
ii) eine Temperaturhalteperiode zum Halten der Lebensmitteltemperatur innerhalb eines Temperaturbereichs von 30°C bis 60°C über eine Haltezeitdauer in dem Bereich von 2 bis 20 Minuten, wobei das Lebensmittel während der Vorwärmperiode von einer Starttemperatur auf eine Anfangstemperatur der Temperaturhalteperiode vorgewärmt wird; und nach der Temperaturhalteperiode,
iii) eine Aufwärmperiode zum Erwärmen des Lebensmittels auf eine zweite Lebensmitteltemperatur von höchstens 100°C.

14. Temperatursteuerverfahren nach Anspruch 13, wobei das Steuerschema ferner eine Kühlperiode zum Kühlen des Lebensmittels umfasst, nachdem die Lebensmitteltemperatur die zweite Lebensmitteltemperatur erreicht hat.

15. Temperatursteuerung-Computerprogramm, umfassend Programmcodeeinrichtungen, um einen Computer zu veranlassen, die Schritte des Temperatursteuerverfahrens nach Anspruch 13 durchzuführen, wenn das Computerprogramm auf dem Computer durchgeführt wird.

## Revendications

1. Dispositif de commande de température comprenant une unité de commande configurée pour commander une unité de chauffage d'un appareil de cuisson d'aliments selon le schéma de commande suivant:
i) une période de préchauffage pour chauffer l'aliment à une première température d'aliment d'au plus 60°C;
ii) une période de maintien de la température pour maintenir la température de l'aliment dans une plage de température de 30°C à 60°C pendant une période de temps de maintien dans la plage de 2 à 20 minutes, dans laquelle pendant la période de préchauffage l'aliment est préchauffé à partir d'une température de départ à une température de début de la période de maintien en température; et, après la période de maintien en température,
iii) une période de chauffage pour chauffer l'aliment à une seconde température d'aliment d'au plus 100°C.

2. Dispositif de commande de température selon la revendication 1, comprenant en outre une entrée de capteur pour recevoir des données de capteur représentant la température des aliments.

3. Dispositif de commande de température selon l'une quelconque des revendications précédentes, comprenant en outre une entrée de type d'aliment pour recevoir des informations sur le type d'aliment identifiant le type d'aliment.

4. Dispositif de commande de température selon l'une quelconque des revendications précédentes, dans lequel le schéma de commande comprend en outre une période de refroidissement pour refroidir l'aliment après que la température de l'aliment a atteint la seconde température de l'aliment.

5. Dispositif de commande de température selon l'une quelconque des revendications précédentes, dans lequel l'unité de commande est configurée pour commander une unité de refroidissement pour refroidir l'aliment dans une période de refroidissement après que la température de l'aliment a atteint la seconde température de l'aliment.

6. Dispositif de commande de température selon l'une quelconque des revendications précédentes, dans lequel l'unité de commande est configurée pour commander l'unité de chauffage dans la période de maintien de température pour maintenir la température des aliments dans la plage de 40°C à 60°C.

7. Dispositif de commande de température selon l'une quelconque des revendications précédentes, dans lequel l'unité de commande est configurée pour commander l'unité de chauffage dans la période de maintien de température pour maintenir la température des aliments dans la plage de température de 30°C à 60°C pendant un temps duré de maintien comprise entre 2 et 5 minutes.

8. Appareil de cuisson d'aliments comprenant une unité de chauffage et un dispositif de commande de température selon l'une quelconque des revendications précédentes pour commander l'unité de chauffage.

9. Appareil de cuisson d'aliments selon la revendication 8, comprenant en outre un capteur de température pour détecter la température de l'aliment et/ou une température liée à l'aliment à partir de laquelle la température de l'aliment peut être déterminée, dans lequel le dispositif de commande de la température est configuré pour utiliser la température détectée pour commander l'unité de chauffage.

10. Appareil de cuisson d'aliments selon la revendication 8 ou 9, comprenant en outre une interface utilisateur pour recevoir des informations sur le type d'aliment identifiant le type d'entrée d'aliment, dans lequel le dispositif de commande de la température est configuré pour utiliser les informations sur le type d'aliment pour commander l'unité de chauffage.

11. Appareil de cuisson d'aliments selon l'une quelconque des revendications 8-10, comprenant en outre un capteur de type d'aliment pour détecter le type d'aliment et générer des informations sur le type d'aliment identifiant le type d'aliment, dans lequel le dispositif de commande de la température est configuré pour utiliser les informations sur le type d'aliment pour commander l'unité de chauffage.

12. Appareil de cuisson d'aliments selon l'une quelconque des revendications 8-11, dans lequel le dispositif de cuisson d'aliments est configuré comme un cuiseur pour bébé, un multi cuiseur, un appareil sous vide, un cuiseur à vapeur, un four à micro-ondes, un four ou une plaque de cuisson.

13. Procédé de commande de la température pour commander une unité de chauffage d'un appareil de cuisson d'aliments selon le schéma de commande suivant:
i) une période de préchauffage pour chauffer l'aliment à une première température d'aliment d'au plus 60°C;
ii) une période de maintien de la température pour maintenir la température de l'aliment dans une plage de température de 30°C à 60°C pendant une période de temps de maintien dans la plage de 2 à 20 minutes, dans laquelle pendant la période de préchauffage l'aliment est préchauffé à partir d'une température de départ à une température de début de la période de maintien en température; et, après la période de maintien en température,
iii) une période de chauffage pour chauffer l'aliment à une seconde température d'aliment d'au plus 100°C.

14. Procédé de commande de température selon la revendication 13, dans lequel le schéma de commande comprend en outre une période de refroidissement pour refroidir l'aliment après que la température de l'aliment a atteint la seconde température de l'aliment.

15. Programme informatique de commande de température comprenant des moyens de code de programme pour amener un ordinateur à exécuter les étapes du procédé de commande de température selon la revendication 13 lorsque ledit programme informatique est exécuté sur l'ordinateur.
